# EUROPÄISCHE PATENTSCHRIFT

(11) **EP 2 842 386 B1**
(45) Veröffentlichungstag und Bekanntmachung des Hinweises auf die Patenterteilung: **10.01.2018**
(21) Anmeldenummer: 13723431.6
(22) Anmeldetag: 25.04.2013
(51) Int. Cl.: H05B 6/10, H05B 6/12

(54) **HEIZKÖRPER**
HEATING ELEMENT
ÉLÉMENT CHAUFFANT

(30) Priorität: 26.04.2012 DE 102012206991
(43) Veröffentlichungstag der Anmeldung: 04.03.2015
(73) Patentinhaber: Behr-Hella Thermocontrol GmbH, 59557 Lippstadt (DE)
(72) Erfinder: PANKRATZ, Harri, 59505 Bad Sassendorf (DE); THIEMANN, Hans-Joachim, 33142 Büren (DE)
(74) Vertreter: Grauel, Andreas
(86) Internationale Anmeldenummer: PCT/EP2013/058665
(87) Internationale Veröffentlichungsnummer: WO 2013/160417

(56) Entgegenhaltungen:
- WO-A1-2005/072013
- WO-A1-2011/024645
- DE-A1- 10 343 011
- DE-A1-102010 020 189

## Beschreibung

### Technisches Gebiet

Die Erfindung betrifft einen Heizkörper, insbesondere ein Heizkörper zur induktiven Erwärmung, mit einem elektrisch leitenden Material, welcher in ein durch Wechselstrom erzeugtes Magnetfeld einer Induktionsspule einbringbar ist.

### Stand der Technik

Per Induktion können elektrisch leitende Materialien erwärmt werden. Dies geschieht indem ein elektrisch leitfähiges Material in ein Magnetfeld, welches durch eine Induktionsspule erzeugt wird gebracht wird. Das Magnetfeld wird hierbei durch Wechselstrom erzeugt, was zu einer Umpolung des Magnetfeldes in der Frequenz des Wechselstroms führt.

Durch das wechselnde Magnetfeld werden Wirbelströme in das elektrisch leitende Material induziert. Diese induzierten Wechselströme wirken gegen den spezifischen Widerstand des Materials, wodurch Wärme erzeugt wird.

Die Induktion kann hierbei durch nicht leitende Materialien hindurch erfolgen, welche keine Erwärmung erfahren. Lediglich die Wärmeabstrahlung des elektrisch leitenden Materials kann zu einer Erwärmung der umgebenden nicht leitenden Materialien führen.

Erwärmung per Induktion ist heute in vielen Anwendungen zu finden. Die häufigsten industriellen Anwendungen sind etwa das Anlassen, Glühen, Schmelzen oder Schweißen von Metallen. Aber auch in der Haushaltstechnik ist das induktive Erwärmen etwa in Induktionskochfeldern zu finden.

Induktionsheizungen werden weiterhin auch zur Erwärmung von Fluiden genutzt, welche einen Heizkörper umfließen. Insbesondere zum Einsatz in Wasserkreisläufen in Elektrofahrzeugen sind Induktionsheizungen geeignet, da mit einem relativ hohen Wirkungsgrad elektrische Energie in Wärme umgesetzt werden kann. Dies ist insbesondere vorteilhaft, da bei Elektrofahrzeugen keine Abwärme vom Verbrennungsmotor entsteht und diese somit nicht zur Erwärmung etwa des Fahrgastinnenraums genutzt werden kann.

Der Wirbelstromverlauf und damit auch die Wärmeverteilung im zu erwärmenden Material hängt, ganz wesentlich von der Heizkörperform, dem Material aus dem der Heizkörper besteht und von der Art des Magnetfeldes der Induktionsspule ab. Durch eine nicht optimale Auswahl der hier genannten Parameter kann es zu einer großen Inhomogenität der Wärmeverteilung innerhalb des Heizkörpers kommen.

Diese Inhomogenität stellt insbesondere für die Aufgabe der gleichmäßigen Erwärmung eines Heizkörpers eine Beeinträchtigung dar.

Die Dokumente WO 2005/072013 A1, DE 10 2010 020189 A1, DE 103 43 011 A1 und WO 2011/024645 A1 offenbaren Heizkörper zur induktiven Erwärmung nach dem Stand der Technik.

### Darstellung der Erfindung, Aufgabe, Lösung, Vorteile

Daher ist es die Aufgabe der vorliegenden Erfindung eine Anordnung für ein elektrisch leitendes und durch Induktion zu erwärmendes Material bereitzustellen, welche eine größtmögliche Homogenität hinsichtlich der Wärmeverteilung innerhalb des Materials zulässt.

Die Aufgabe der vorliegenden Erfindung wird durch eine Induktionsspule mit den Merkmalen gemäß Anspruch 1 gelöst. Vorteilhafte Weiterbildungen der vorliegenden Erfindung sind in den Unteransprüchen definiert.

Vorteilhaft ist ein Heizkörper, insbesondere ein Heizkörper zur induktiven Erwärmung, mit einem elektrisch leitenden Material, welcher in ein durch Wechselstrom erzeugtes Magnetfeld einer Induktionsspule einbringbar ist, wobei das elektrisch leitfähige Material in eine Mehrzahl einzelner Materialabschnitte unterteilt ist, die elektrisch nicht leitend voneinander beabstandet sind und durch elektrisch leitende Verbindungselemente zu einem in sich geschlossenen Leiternetzwerk verbunden sind.

Weiterhin vorteilhaft ist es, wenn das elektrisch leitfähige Material auf einer elektrisch isolierenden Trägerschicht aufgebracht ist und/oder wenn das Material elektrisch isoliert in einem von zumindest einem zu erwärmenden Medium gefüllten Bereich positioniert ist. Dies ist erforderlich um ein ungewolltes Weiterleiten der Wirbelströme, welche im Heizkörper durch das magnetische Wechselfeld der Induktionsspule entstehen an die Umgebung zu verhindern. Dies würde die Heizleistung der Induktionsheizung negativ beeinflussen.

Außerdem ist es zu bevorzugen, wenn mindestens eine erste Fläche der Materialabschnitte mit dem zu erwärmenden Medium in Kontakt steht. Dies ist notwendig um einen vorteilhaften Wärmeübergang vom Heizkörper zum zu erwärmenden Medium sicherzustellen.

Außerdem vorteilhaft ist es, wenn das den Heizkörper umgebende Medium nicht oder nur sehr schwach elektrisch leitfähig ist. Sehr schwach leitfähig bedeutet dabei beispielsweise eine Leitfähigkeit von 1/1000 der Leitfähigkeit des elektrisch leitfähigen Materials oder weniger. Dies trägt ebenfalls zur besseren Isolation des Heizkörpers bei und vermindert so die Verluste innerhalb der Induktionsheizung aufgrund von ungewollten Weiterleitungen von induzierten Wirbelströmen.

Weiterhin ist es zu bevorzugen, wenn die einzelnen Materialabschnitte in einem im Wesentlichen gleichmäßigen oder im Wesentlichen ungleichmäßigen Muster oder Geometrie im Magnetfeld der Induktionsspule verteilt sind. So kann der Heizkörper individuell an einen speziellen Einsatzzweck angepasst werden.

In einer weiteren vorteilhaften Ausführungsform, sind die Materialabschnitte in einer oder in mehrere Ebenen angeordnet. Auf diese Weise kann ein zu erwärmendes Medium einen größeren Oberflächenkontakt mit den Materialabschnitten des Heizkörpers haben, wodurch der Wärmeübergang verbessert wird.

Außerdem ist es zu bevorzugen, wenn das Material zu einer Spirale angeordnet oder aufgewickelt ist, wobei die einzelnen Windungen oder Wicklungen der Spirale zueinander elektrisch nicht leitend beabstandet sind und das Zentrum der Spirale mit dem äußersten Ende der Spirale elektrisch leitend über ein Verbindungselement verbunden ist.

In einer weiteren vorteilhaften Ausführungsform ist der Heizkörper in einer räumlichen Begrenzung elektrisch isoliert positioniert und ist dort mit einem zu erwärmenden Fluid in Kontakt, wobei der Heizkörper weiterhin in einem magnetischen Wechselfeld einer Induktionsspule angeordnet ist, welche in einen mit Wechselstrom betreibbaren Stromkreis integriert ist.

### Kurze Beschreibung der Zeichnungen

Im Folgenden wird die Erfindung anhand eines Ausführungsbeispiels unter Bezugnahme auf die Zeichnung detailliert erläutert. In der Zeichnung zeigen:
- Fig.1: zeigt eine schematische Anordnung einer Induktionsheizung,
- Fig. 2: zeigt eine erfindungsgemäße Ausführungsform eines Heizkörpers für eine Induktionsheizung,
- Fig. 3: zeigt eine weitere erfindungsgemäße Ausführungsform eines Heizkörpers für eine Induktionsheizung, und
- Fig. 4: zeigt eine weitere erfindungsgemäße Ausführungsform eines Heizkörpers für eine Induktionsheizung.

### Bevorzugte Ausführung der Erfindung

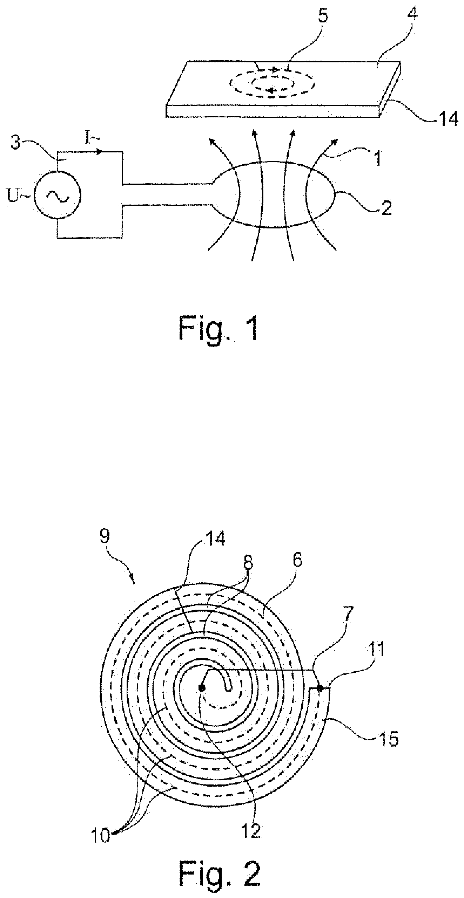

Figur 1 zeigt den prinzipiellen Aufbau einer Induktionsheizung. Dargestellt ist die Induktionsspule 2, welche an einen Stromkreis 3 angeschlossen ist, welcher mit Wechselspannung betrieben wird. Durch die Wechselspannung im Stromkreis 3 wird in der Induktionsspule 2 ein Magnetfeld 1 erzeugt. Auf Grund des im Stromkreis 3 anliegenden Wechselstroms ist das Magnetfeld 1 ein Wechselmagnetfeld, welches mit der Frequenz des Wechselstroms seine magnetische Ausrichtung ändert.

In das Magnetfeld 1 ist ein Heizkörper 4 eingebracht, welcher aus einem elektrisch leitenden Material 14 besteht. In den Heizkörper 4 werden auf Grund des Magnetfeldes 1 Wirbelströme 5 induziert. Da die Wirbelströme 5 gegen den spezifischen Widerstand des Heizkörpers 4 wirken, entsteht Wärme im Heizkörper 4.

Hieraus ergibt sich, dass das Material 14 aus dem der Heizkörper 4 besteht einen gewissen spezifischen inneren Widerstand aufweisen muss, um eine wirksame Erwärmung des Heizkörpers 4 zu ermöglichen. Der innere Widerstand des Materials 14 beeinflusst den Erwärmungseffekt, wobei es zwischen dem Widerstand und dem Erwärmungseffekt ein spezifisches Optimum gibt.

Der Heizkörper 4 muss in einem solchen Abstand zur Induktionsspule 2 angeordnet sein, dass er sich noch innerhalb des sich bildenden Magnetfeldes befindet. Zwischen dem Heizkörper 4 und der Induktionsspule 2 können andere Elemente aus elektrisch nicht leitenden Materialien angeordnet sein.

Nach diesem einfachen Prinzip sind Induktionsheizungen aufgebaut. Der Heizkörper 4 kann in alternativen Ausführungsformen auch andere Außenmaße und -formen aufweisen. So ist prinzipiell jede regelmäßige oder auch unregelmäßige Anordnung des Materials 14 des Heizkörpers 4 denkbar. Weitere Ausführungen hierzu folgen in der Beschreibung der Figur 2.

Figur 2 zeigt eine spezielle Ausführungsform eines Heizkörpers 4. Ein solcher Heizkörper 4 kann in einer Anordnung, wie sie bereits in Figur 1 gezeigt wurde, verwendet werden.

Der Heizkörper 4 besteht aus einem elektrisch leitenden Material 14, welches zu einer Spirale 15 aufgerollt wurde. Die einzelnen Bahnen 10 des Materials 14 sind durch eine nicht elektrisch leitende Trennschicht 8 voneinander elektrisch isoliert. Dies kann entweder durch bloße Beabstandung, also durch Luft zwischen den Bahnen 10 des Materials 14 erfolgen, oder aber durch das Einbringen eines elektrisch isolierenden Materials, welches dann die elektrisch nicht leitende Trennschicht 8 darstellt.

Die im Heizkörper 4 der Figur 2 entstehenden Wirbelströme 6 verlaufen innerhalb der Bahnen 10 des Materials 14 in Form der Spirale 15. Dies führt zu einer sehr homogenen Verteilung innerhalb des Heizkörpers 4. Entsprechend der homogenen Verteilung der Wirbelströme 6 innerhalb des Heizkörpers 4 wird auch die Wärmeentwicklung innerhalb des Heizkörpers 4 von einer großen Homogenität geprägt sein.

Um jedoch das Entstehen der Wirbelströme 6 überhaupt erst zu ermöglichen müssen der Anfang 11 und das Ende 12 des Bandes miteinander in einer elektrisch leitenden Verbindung stehen um einen in sich geschlossenen elektrisch leitenden Kreislauf zu bilden. Dies wird über die elektrisch leitende Verbindung 7 realisiert.

Auch hier kann der Heizkörper 4 im Wesentlichen aus verschiedenen Materialien 14 bestehen, solange die Haupteigenschaft der elektrischen Leitfähigkeit erfüllt ist. Die nicht elektrisch leitende Trennung 8 zwischen den einzelnen Bahnen 10 kann ebenfalls aus verschiedenen Materialien 14 bestehen. Das wichtigste Merkmal des Materials 14 des Heizkörpers 4 ist die elektrische Leitfähigkeit, bzw. sein innerer Widerstand.

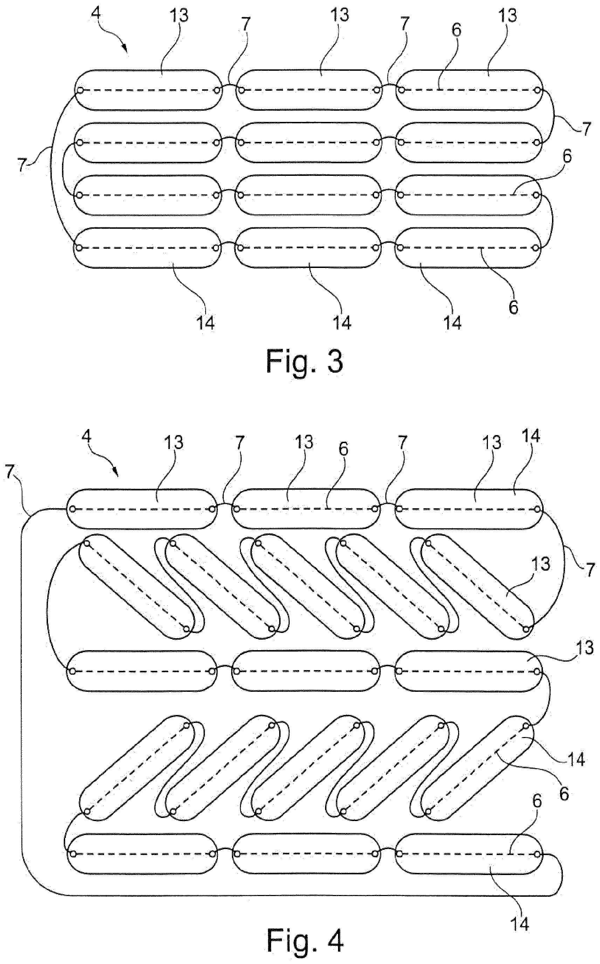

In alternativen Ausführungsformen sind auch weitere Anordnungen des elektrisch leitenden Materials denkbar. Prinzipiell ist jede Anordnung möglich, solange die einzelnen Abschnitte des Materials durch elektrisch leitende Brücken zu einem oder mehreren in sich geschlossenem elektrisch leitenden Kreislauf oder Kreisläufen verbunden sind. Ebenso können die einzelnen Abschnitte auch aus einer Kombination unterschiedlicher Materialien gebildet sein. Beispiele für alternative Ausführungsformen sind in Figur 3 und 4 dargestellt.

Figur 3 und 4 zeigen alternative Anordnungen der einzelnen Materialabschnitte 13 die zusammen jeweils einen Heizkörper 4 bilden. Die Bezugszeichen stimmen mit denen der Figur 2 überein.

Wichtig ist, wie bereits beschrieben, dass die einzelnen Materialabschnitte 13 elektrisch isoliert zueinander beabstandet sind, damit sich die Wirbelströme innerhalb der Materialabschnitte 13 entlang der durch die elektrischen Verbindungselemente 7 vorgegebenen Reihenfolge aufbauen. Alle Materialabschnitte 13 müssen zusammen einen oder mehrere, in sich geschlossenen elektrisch leitenden Kreislauf oder Kreisläufe bilden.

Durch diese Aufteilung des Heizkörpers 4 in mehrere Abschnitte 13 ist es möglich einen Heizkörper 4 zu formen, der speziell auf seinen Anwendungszweck ausgelegt ist. So können definierte Flächen zielgerichtet erwärmt werden, indem die Anordnung der Materialabschnitte 13 an die zu erwärmende Fläche angepasst wird.

In weiteren alternativen Ausführungsformen sind auch abweichende Geometrien der Materialabschnitte vorstellbar. So könnten die einzelnen Materialabschnitte auch als rohrähnliche Gebilde ausgeführt sein, so dass die Materialabschnitte vom zu erwärmenden Medium nicht nur umströmbar, sondern auch durchströmbar sind.

## Patentansprüche

1. Heizkörper (4) zur induktiven Erwärmung, mit einem elektrisch leitenden Material (14), welcher in ein durch Wechselstroms erzeugtes Magnetfeld (1) einer Induktionsspule (2) einbringbar ist, **dadurch gekennzeichnet, dass** das elektrisch leitende Material (14) in eine Mehrzahl einzelner Materialabschnitte (10, 13) unterteilt ist, die elektrisch nicht leitend voneinander beabstandet sind und durch elektrisch leitende Verbindungselemente (7) zu einem in sich geschlossenen Leiternetzwerk verbunden sind.

2. Heizkörper (4) nach Anspruch 1, **dadurch gekennzeichnet, dass** das elektrisch leitende Material (14) auf einer elektrisch isolierenden Trägerschicht aufgebracht ist.

3. Heizkörper (4) nach Anspruch 1 oder 2, **dadurch gekennzeichnet, dass** das elektrisch leitende Material (14) elektrisch isoliert in einem von zumindest einem zu erwärmenden Medium gefüllten Bereich positioniert ist.

4. Heizkörper (4) nach einem der vorhergehenden Ansprüche, **dadurch gekennzeichnet, dass** mindestens eine erste Fläche der Materialabschnitte (10, 13) mit dem zu erwärmenden Medium in Kontakt steht.

5. Heizkörper (4) nach Anspruch 3, **dadurch gekennzeichnet, dass** das den Heizkörper (4) umgebende Medium nicht oder nur sehr schwach elektrisch leitfähig ist.

6. Heizkörper (4) nach einem der vorhergehenden Ansprüche, **dadurch gekennzeichnet, dass** die einzelnen Materialabschnitte (10, 13) in einem im Wesentlichen gleichmäßigen oder im Wesentlichen ungleichmäßigen Muster im Magnetfeld (1) der Induktionsspule (2) verteilt sind.

7. Heizkörper (4) nach einem der vorhergehenden Ansprüche, **dadurch gekennzeichnet, dass** die Materialabschnitte (10, 13) in einer oder in mehreren Ebenen angeordnet sind.

8. Heizkörper (4) nach einem der vorhergehenden Ansprüche, **dadurch gekennzeichnet, dass** das Material (14) zu einer Spirale (15) angeordnet oder aufgewickelt ist, wobei die einzelnen Windungen oder Wicklungen der Spirale (15) zueinander elektrisch nicht leitend beabstandet sind und das Zentrum der Spirale (12) mit dem äußersten Ende der Spirale (11) elektrisch leitend über ein Verbindungselement (7) verbunden ist.

9. Anordnung eines Heizkörper (4) nach einem der vorhergehenden Ansprüche, **dadurch gekennzeichnet, dass** der Heizkörper (4) in einer räumlichen Begrenzung elektrisch isoliert positioniert ist und dort mit einem zu erwärmenden Fluid in Kontakt gebracht wird, wobei der Heizkörper (4) weiterhin in einem magnetischen Feld (1) einer Induktionsspule (2) angeordnet ist, welche in einen mit Wechselstrom betreibbaren Stromkreis (3) integriert ist.

## Claims

1. A heating element (4) for induction heating with an electrically conductive material (14) which can be introduced into a magnetic field (1) of an induction coil (2) generated by an alternating current, **characterised in that** the electrically conductive material (14) is divided into a plurality of individual material sections (10, 13) which are spaced apart from one another in an electrically nonconductive manner and are connected by electrically conductive connecting elements (7) to form a complete conductor network.

2. The heating element (4) according to claim 1, **characterised in that** the electrically conductive material (14) is applied to an electrically isolating support layer.

3. The heating element (4) according to claim 1 or 2, **characterised in that** the electrically conductive material (14) is positioned electrically isolated in an area filled with at least one medium to be heated.

4. The heating element (4) according to one of the preceding claims, **characterised in that** at least one first surface of the material sections (10, 13) is in contact with the medium to be heated.

5. The heating element (4) according to claim 3, **characterised in that** the medium surrounding the heating element (4) is not or only very slightly electrically conductive.

6. The heating element (4) according to one of the preceding claims, **characterised in that** the individual material sections (10, 13) are distributed in a substantially uniform or substantially nonuniform pattern in the magnetic field (1) of the induction coil (2).

7. The heating element (4) according to one of the preceding claims, **characterised in that** the material sections (10, 13) are arranged in one or more planes.

8. The heating element (4) according to one of the preceding claims, **characterised in that** the material (14) is arranged or coiled into a spiral (15), wherein the individual windings or coils of the spiral (15) are spaced apart from one another in an electrically nonconductive manner and the centre of the spiral (12) is connected to the outermost end of the spiral (11) in an electrically conductive manner by a connecting element (7).

9. An arrangement of a heating element (4) according to one of the preceding claims, **characterised in that** the heating element (4) is positioned electrically isolated in a spatially limited area and is there brought into contact with a fluid to be heated, wherein the heating element (4) is furthermore arranged in a magnetic field (1) of an induction coil (2) which is integrated in a current circuit (3) operable with alternating current.

## Revendications

1. Elément chauffant (4) pour le chauffage par induction, élément chauffant qui comprend un matériau électroconducteur (14) et qui peut être introduit dans un champ magnétique (1) d'une bobine d'induction (2), ledit champ magnétique étant produit par un courant alternatif, **caractérisé en ce que** le matériau électroconducteur (14) est subdivisé en une pluralité de différentes parties de matériau (10, 13) qui sont espacées les unes des autres en étant électriquement non conductrices et sont reliées par des éléments de connexion (7) électroconducteurs, pour former un réseau de conducteurs en soi fermé.

2. Elément chauffant (4) selon la revendication 1, **caractérisé en ce que** le matériau électroconducteur (14) est appliqué sur une couche support électroisolante.

3. Elément chauffant (4) selon la revendication 1 ou 2, **caractérisé en ce que** le matériau électroconducteur (14) est positionné, de manière électroisolée, dans une zone remplie par au moins un milieu à chauffer.

4. Elément chauffant (4) selon l'une quelconque des revendications précédentes, **caractérisé en ce qu'**au moins une première surface des parties de matériau (10, 13) est en contact avec le milieu à chauffer.

5. Elément chauffant (4) selon la revendication 3, **caractérisé en ce que** le milieu entourant l'élément chauffant (4) n'est pas ou n'est que très faiblement électroconducteur.

6. Elément chauffant (4) selon l'une quelconque des revendications précédentes, **caractérisé en ce que** les différentes parties de matériau (10, 13) sont réparties, dans le champ magnétique (1) de la bobine d'induction (2), suivant une configuration pratiquement uniforme ou pratiquement non uniforme.

7. Elément chauffant (4) selon l'une quelconque des revendications précédentes, **caractérisé en ce que** les parties de matériau (10, 13) sont disposées dans un ou plusieurs plans.

8. Elément chauffant (4) selon l'une quelconque des revendications précédentes, **caractérisé en ce que** le matériau (14) est disposé ou enroulé pour former une spirale (15), où les différentes spires ou les différents enroulements de la spirale (15) sont espacés les uns des autres en étant électriquement non conducteurs, et où le centre (12) de la spirale est relié par un élément de connexion (7), en étant électriquement conducteur, à l'extrémité (11) de la spirale, placée le plus à l'extérieur.

9. Agencement d'un élément chauffant (4) selon l'une quelconque des revendications précédentes, **caractérisé en ce que** l'élément chauffant (4) est positionné, de manière électroisolée, dans une délimitation spatiale et là, dans ladite délimitation spatiale, ledit élément chauffant est mis en contact avec un fluide à chauffer, où l'élément chauffant (4) est disposé en outre dans un champ magnétique (1) d'une bobine d'induction (2) qui est intégrée dans un circuit électrique (3) pouvant être activé avec un courant alternatif.
